# EUROPÄISCHE PATENTSCHRIFT

(11) **EP 2 554 404 B1**
(45) Veröffentlichungstag und Bekanntmachung des Hinweises auf die Patenterteilung: **12.09.2018**
(21) Anmeldenummer: 12176038.3
(22) Anmeldetag: 12.07.2012
(51) Int. Cl.: B60C 11/12, B60C 11/03

(54) **Laufstreifenprofil eines Fahrzeugluftreifens**
Tread band profile of a pneumatic vehicle tyre
Profil de bande de roulement d´un pneu de véhicule

(30) Priorität: 01.08.2011 DE 102011052316
(43) Veröffentlichungstag der Anmeldung: 06.02.2013
(73) Patentinhaber: Continental Reifen Deutschland GmbH, 30165 Hannover (DE)
(72) Erfinder: Rittweger, Stefan, 30163 Hannover (DE)
(74) Vertreter: Finger, Karsten

(56) Entgegenhaltungen:
- EP-A1- 0 618 092
- EP-A1- 1 580 034
- EP-A2- 1 195 271
- WO-A1-2010/133940
- DE-A1-102004 014 007
- JP-A- 2002 283 813

## Beschreibung

Die Erfindung betrifft ein Laufstreifenprofil eines Fahrzeugluftreifens mit über den Umfang des Reifens erstreckten Profilbändern - wie zum Beispiel Umfangsrippen oder Profilblockreihen -, welche zwischen zwei Umfangsrillen angeordnet sind, wobei die Profilbänder in axialer Richtung A zu einer das Profilband begrenzenden Umfangsrille jeweils von einer Flanke begrenzt ist, welche die zum Profilband weisende Rillenwand der Umfangsrille bildet, und wobei die Profilbänder in radialer Richtung R nach außen hin von einer die Bodenkontaktoberfläche bildenden radial äußeren Oberfläche begrenzt sind, mit einem Netz von Feineinschnitten in der radial äußeren Oberfläche zumindest eines Profilbandes, welches aus im Wesentlichen in Umfangsrichtung U ausgerichteten Feineinschnitten und aus diese Feineinschnitte schneidenden, von der einen Umfangsrille zur anderen Umfangsrille erstreckten, quer verlaufenden Feineinschnitten ausgebildet ist.

Eine derartige Ausbildung von Fahrzeugluftreifen mit Netzstruktur von sich kreuzenden Feineinschnitten ist zum Beispiel von Winterreifen bekannt. Hierdurch werden Griffkanten in Umfangsrichtung und in axialer Richtung geschaffen. Bei Winterreifen wird dabei die Netzstruktur von Feineinschnitten mit einer möglichst tiefen Ausbildung der Feineinschnitte des Netzes ausgebildet, um den durch die Feineinschnitte erzielten Griff auf Schnee und Eis möglichst lange zu erhalten. Hierdurch können relativ gute Griffeigenschaften auf Schnee und Eis sowohl in Umfangsrichtung des Fahrzeugreifens als auch in axialer Richtung des Reifens und gute Handling-, Brems- und Traktionseigenschaften auf Schnee und Eis erzielt werden. Die tiefe Ausbildung der Feineinschnitte des Netzes führt jedoch auch zu einer Aufweichung der Struktur, die sich negativ auf Trockeneigenschaften, wie z. B. Brems- und Traktionseigenschaften und Handlingeigenschaften auf trockener Straße, auswirken können. Diesen wird üblicherweise mit zusätzlichen Maßnahmen versucht, entgegenzuwirken. Die tiefe Ausbildung des Netzes von Feineinschnitten kann darüber hinaus beim Durchlaufen des Reifenlatsches aufgrund der Verformung des Materials unter der wirkenden Last zu einer erhöhten Kompression im Profilelement führen, welche sich negativ auf den Rollwiderstand auswirkt.

Bei Sommerreifen, welche spezielle auf die sommerlichen Temperaturen und Witterungsverhältnisse abgestimmte Eigenschaften aufweisen, ist es bekannt, in Profilbändern Feineinschnitte in axialer Richtung des Fahrzeugluftreifens zur Verbesserung der Nassgriffeigenschaften wie z.B. Bremsen auf nasser Straße auszubilden. Damit die Profilbänder die bei Sommerreifen gewünschte hohe Umfangssteifigkeit und Biegesteifigkeit und somit gute Bremseigenschaften auf trockenen Straßen aufweisen, sind über den Umfang des Fahrzeugluftreifens hinweg die axial verlaufenden Feineinschnitte mit relativ großem Abstand zueinander bzw. mit geringer Anordnungsdichte angeordnet und nur mit geringer Tiefe ausgebildet. Die hierdurch erreichte hohe Steifigkeit wirkt sich jedoch negativ auf den Rollwiderstand des Reifens aus. Die geringe Einschnitttiefe der Feineinschnitte begrenzt die Wirkung der durch die Feineinschnitte bewirkten Griffkanten für den Nassgriff auf einen relativ kurzen Lebensabschnitt des Reifens. Werden in alternativer Ausbildung die vorhandenen Feineinschnitte sehr tief ausgebildet, wird zwar die Wirkung der Griffkanten auf die Nassgriffeigenschaften des Reifens über dessen Lebensdauer verlängert, allerdings unter Reduktion der Umfangssteifigkeit der Profilbänder und der Steifigkeit der Profilbänder gegen Verbiegen um Achsparallelen des Fahrzeugreifens, wodurch die Trockeneigenschaften des Reifens wie Bremsen und Traktion auf trockener Straße negativ beeinflusst werden. Werden beim Sommerreifen die axial verlaufenden Feineinschnitte sehr dicht ausgebildet, kann sich dies ebenfalls zur Verbesserung des Nassgriffs durch erhöhte Zahl der Griffkanten, aber unter Inkaufnahme verschlechterter Trockeneigenschaften auswirken. Eine sehr dichte und tiefe Ausbildung derartiger axial verlaufender Feineinschnitte kann beim Durchlaufen des Latsches zur Erhöhung der Kompression und somit zu einer weiteren Verschlechterung des Rollwiderstandes führen.

Aus der DE 20 2004 014 007 A1 ist es bekannt, Lamellenblechgitter aus sich schneidenden Lamellenblechen auszubilden und diese in eine Vulkanisationsform einzusetzen.

Der Erfindung liegt daher die Aufgabe zugrunde, mit einfachen Mitteln einen Reifen mit guten Sommereigenschaften mit einem gutem Rollwiderstand bei guten Nassgriffeigenschaften und bei guten Trockeneigenschafften zu ermöglichen.

Die Aufgabe wird erfindungsgemäß durch die Ausbildung eines Laufstreifenprofiles eines Fahrzeugluftreifens mit über den Umfang des Reifens erstreckten Profilbändern - wie zum Beispiel Umfangsrippen oder Profilblockreihen -, welche zwischen zwei Umfangsrillen angeordnet sind, wobei die Profilbänder in axialer Richtung A zu einer das Profilband begrenzenden Umfangsrille jeweils von einer Flanke begrenzt ist, welche die zum Profilband weisende Rillenwand der Umfangsrille bildet, und wobei die Profilbänder in radialer Richtung R nach außen hin von einer die Bodenkontaktoberfläche bildenden radial äußeren Oberfläche begrenzt sind, mit einem Netz von Feineinschnitten in der radial äußeren Oberfläche zumindest eines Profilbandes, welches aus im Wesentlichen in Umfangsrichtung U ausgerichteten Feineinschnitten und aus diese Feineinschnitte schneidenden, von der einen Umfangsrille zur anderen Umfangsrille erstreckten, quer verlaufenden Feineinschnitten ausgebildet ist, gemäß den Merkmalen von Anspruch 1 gelöst, bei dem die zwischen dem zu einer Umfangsrille jeweils nächstgelegenen in Umfangsrichtung U ausgerichteten Feineinschnitt des Netzes und der Umfangsrille ausgebildeten axialen Erstreckungsabschnitte der querverlaufenden Feineinschnitte mit einer unterschiedlichen in radialer Richtung R gemessenen maximalen Tiefe mit wenigstens zwei unterschiedlichen maximalen Tiefen t₁ und t₂ mit t₁ > t₂ ausgebildet sind, wobei die axialen Erstreckungsabschnitte der Feineinschnitte unterschiedlicher Tiefenausbildung in Umfangsrichtung U des Fahrzeugluftreifens in alternierender Abfolge angeordnet sind, und bei dem der in dem zwischen den beiden jeweils zu einer der beiden Umfangsrillen nächstgelegenen und in Umfangsrichtung U ausgerichteten Feineinschnitt des Netzes ausgebildete axiale Erstreckungsabschnitt der querverlaufenden Feineinschnitte mit der kleineren t₂ der wenigstens zwei Tiefen der Feineinschnitte ausgebildet ist.

Mit Hilfe des Netzes von Feineinschnitten können gute Handling- und Brems- und Traktionseigenschaften auf nasser Straße erzielt werden. Das Profilband ist durch ein in ihrer Tiefenausbildung begrenztes Netz mit Feineinschnitten geringerer Feineinschnitttiefe der Tiefe t₂ mit einer hohen Grundsteifigkeit ausgebildet und lediglich in begrenzten einzelnen axialen Abschnitten im Randbereich zur Umfangsrille hin mit einer erhöhten Tiefe t₁, die ein weites Öffnen der Feineinschnitte in diesen Abschnitten ermöglicht. Hierdurch kann über den Umfang des Reifens verteilt beim Einlauf und beim Auslauf in den Reifenlatsch ein ausreichendes Öffnen von Feineinschnitten ermöglicht werden, wodurch durch der Rollwiderstand reduziert wird. Darüber hinaus kann durch die Ausbildung mit lediglich einzelnen begrenzten über den Umfang verteilten Abschnitten im Randbereich zur Umfangsrille hin die beim Latschdurchlauf entstehende Kompression im Bereich von Feineinschnitten begrenzt werden, was sich ebenfalls positiv für einen geringen Rollwiderstand auswirkt. Somit kann der Rollwiderstand weiter verbessert werden. Das Netz von Feineinschnitten bietet ein umfangreiches Gebilde von Griffkanten in Umfangs- und in axialer Richtung, welches durch die tiefen Abschnitte auch nach vielen gefahrenen Kilometern noch verbesserten Nassgriff gewährleisten kann. Das Netz mit nur begrenzten einzelnen Abschnitten erhöhter Feineinschnittstiefe ermöglicht eine hohe Steifigkeit des Profilbandes in Umfangsrichtung und gegen Verbiegen um die axiale Richtung und gute Brems- und Traktionseigenschaften sowie Handlingseigenschaften auf trockener Straße, und das bereits bei Neureifen.

Besonders vorteilhaft ist die Ausbildung eines Laufstreifenprofils eines Fahrzeugluftreifens gemäß den Merkmalen von Anspruch 2, wobei die querverlaufenden Feineinschnitte des Netzes in dem zwischen dem zu einer Umfangsrille jeweils nächstgelegenen in Umfangsrichtung U ausgerichteten Feineinschnitt des Netzes und der Umfangsrille ausgebildeten axialen Erstreckungsabschnitt, welche in dem Erstreckungsabschnitt mit maximaler Tiefe t₂ ausgebildet sind, in dem gesamten axialen Erstreckungsabschnitt zwischen dem der Umfangsrille nächstgelegenen in Umfangsrichtung U ausgerichteten Feineinschnitt des Netzes und dieser Umfangsrille mit der Tiefe t₂ ausgebildet sind. Durch diese Ausbildung kann ein vergleichmäßigt guter Abrieb begünstigt und der Zielkonflikt der Trockeneigenschaften gegen Rollwiderstand weiter positiv beeinflusst werden.

Besonders vorteilhaft ist die Ausbildung eines Laufstreifenprofils eines Fahrzeugluftreifens gemäß den Merkmalen von Anspruch 3, wobei die in dem zur einen Umfangsrille hin angrenzenden mit der größeren Tiefenausbildung t₁ ausgebildeten axialen Erstreckungsabschnitte querverlaufender Feineinschnitte des Netzes in Umfangsrichtung U zwischen den zur anderen Umfangsrille hin angrenzenden mit der größeren Tiefenausbildung t₁ ausgebildeten axialen Erstreckungsabschnitten von querverlaufenden Feineinschnitten angeordnet sind. Durch diese Ausbildung kann ein vergleichmäßigt guter Abrieb begünstigt und der Zielkonflikt der Trockeneigenschaften gegen Rollwiderstand weiter positiv beeinflusst werden.

Besonders vorteilhaft ist die Ausbildung eines Laufstreifenprofils eines Fahrzeugluftreifens gemäß den Merkmalen von Anspruch 4, wobei die in der radial äußeren Oberfläche ausgebildeten Feineinschnitte des Netzes des Profilbandes Paare von in Umfangsrichtung U hintereinander benachbart angeordneten in axialer Richtung A erstreckten Feineinschnitten aufweisen mit einem in der radial äußeren Oberfläche längs der axialen Erstreckung von der einen Umfangsrille zur anderen Umfangsrille entgegengesetzt zueinander gekrümmtem Verlauf. Auf diese Weise kann ermöglicht werden, dass beim Abrollen des Reifens die durch die Feineinschnitte erzeugten Kanten unterschiedlich auf die Straßenoberfläche aufschlagen, wodurch ein leises, komfortables Abrollen begünstigt wird.

Besonders vorteilhaft ist die Ausbildung eines Laufstreifenprofils eines Fahrzeugluftreifens gemäß den Merkmalen von Anspruch 5, wobei in der radial äußeren Oberfläche des Profilbandes das Netz mit zwei unterschiedlichen Paaren von in Umfangsrichtung U hintereinander benachbart angeordneten Feineinschnitten mit einem in der radial äußeren Oberfläche längs der axialen Erstreckung von der einen Umfangsrille zur anderen Umfangsrille entgegengesetzt gekrümmtem Verlauf ausgebildet sind, welche über den Umfang des Reifens verteilt in alternierender Reihenfolge angeordnet sind. Auf diese Weise kann besonders zuverlässig ermöglicht werden, dass beim Abrollen des Reifens die durch die Feineinschnitte erzeugten Kanten unterschiedlich auf die Straßenoberfläche aufschlagen, wodurch ein leises, komfortables Abrollen begünstigt wird.

Besonders vorteilhaft ist die Ausbildung eines Laufstreifenprofils eines Fahrzeugluftreifens gemäß den Merkmalen von Anspruch 6, wobei der gekrümmte Verlauf beider Feineinschnitte eines Paares jeweils einen Abschnitt einer in axialer Richtung A erstreckten Wellenform mit in Umfangsrichtung U gemessener Amplitude bildet. Die Ausbildung ermöglicht die Integration eines einfach skalierbaren und replizierbaren Feineinschnittsmusters, bei welchem beim Abrollen des Reifens die durch die Feineinschnitte erzeugten Kanten unterschiedlich auf die Straßenoberfläche aufschlagen, wodurch ein leises, komfortables Abrollen begünstigt wird. Die Ausbildung erleichtert auch die Ausbildung von ähnlich großen von Feineinschnitten und Rillen umschlossenen Gummiabschnitten, wodurch das homogene Abrollen weiter begünstigt wird.

Besonders vorteilhaft ist die Ausbildung eines Laufstreifenprofils eines Fahrzeugluftreifens gemäß den Merkmalen von Anspruch 7, wobei der gekrümmte Verlauf beider Feineinschnitte eines Paares jeweils einen zu einander phasenversetzten Abschnitt einer Wellenform gleicher Wellenlänge (L₂,L₃) bildet. Dies erleichtert die Ausbildung von ähnlich großen von Feineinschnitten und Rillen umschlossenen Gummiabschnitten. Hierdurch kann auch eine zum Abrollen günstige Musterbildung mit gleichmäßiger Steifigkeitsverteilung im Profil und somit ein besonders homogenes Abrollen ermöglicht werden.

Besonders vorteilhaft ist die Ausbildung eines Laufstreifenprofils eines Fahrzeugluftreifens gemäß den Merkmalen von Anspruch 8, wobei der gekrümmte Verlauf beider Feineinschnitte eines Paares jeweils einen zu einander phasenversetzten Abschnitt einer Wellenform gleicher in Umfangsrichtung U gemessener Amplitude bildet. Dies erleichtert die Ausbildung von ähnlich großen von Feineinschnitten und Rillen umschlossenen Gummiabschnitten. Hierdurch kann eine zum Abrollen besonders günstige Musterbildung mit homogener Struktur, mit welchem somit ein besonders homogenes Abrollen ermöglicht werden kann.

Besonders vorteilhaft ist die Ausbildung eines Laufstreifenprofils eines Fahrzeugluftreifens gemäß den Merkmalen von Anspruch 9, wobei die Phase des einen Feineinschnitts eines Paares gegenüber der des anderen Feineinschnitts um einen Phasenwinkel π versetzt ist. Die Ausbildung ermöglicht in einfacher Weise auch die Ausbildung von ähnlich großen von Feineinschnitten und Rillen umschlossenen Gummiabschnitten, wodurch das homogene Abrollen weiter begünstigt wird. Die Ausbildung ermöglicht darüber hinaus kurze, in der zeitlichen Abfolge beim Rollen unterschiedlich aufschlagende Kanten und somit ein günstiges Geräuschverhalten bei Beibehaltung einer ausreichenden Gleichmäßigkeit.

Besonders vorteilhaft ist die Ausbildung eines Laufstreifenprofils eines Fahrzeugluftreifens gemäß den Merkmalen von Anspruch 10, wobei die Phase des einen Feineinschnitts des ersten Paares gegenüber dem einen Feineinschnitt des zweiten Paares um einen Phasenwinkel (π /2) und die Phase des zweiten Feineinschnitts des ersten Paares gegenüber dem zweiten Feineinschnitt des zweiten Paares um einen Phasenwinkel (π/2) versetzt ausgebildet ist. Die Ausbildung ermöglicht in einfacher Weise auch die Ausbildung von ähnlich großen von Feineinschnitten und Rillen umschlossenen Gummiabschnitten, wodurch das homogene Abrollen weiter begünstigt wird. Die Ausbildung ermöglicht darüber hinaus besonders einfach kurze, in der zeitlichen Abfolge beim Rollen unterschiedlich aufschlagende Kanten und somit ein günstiges Geräuschverhalten bei Beibehaltung einer ausreichenden Gleichmäßigkeit.

Besonders vorteilhaft ist die Ausbildung eines Laufstreifenprofils eines Fahrzeugluftreifens gemäß den Merkmalen von Anspruch 11, wobei die beiden Feineinschnitte des zweiten Paares sich in der radial äußeren Oberfläche des Profilbandes - insbesondere in ihrem Wendepunkt - schneiden. Die Ausbildung behindert die Entstehung zu dünner beweglicher Gummiabschnitte zwischen den Feineinschnitten und deren negativen Einfluss auf die Abriebeigenschaften.

Besonders vorteilhaft ist die Ausbildung eines Laufstreifenprofils eines Fahrzeugluftreifens gemäß den Merkmalen von Anspruch 12, wobei die beiden Feineinschnitte des ersten Paares sich in der radial äußeren Oberfläche des Profilbandes nicht schneiden.

Besonders vorteilhaft ist die Ausbildung eines Laufstreifenprofils eines Fahrzeugluftreifens gemäß den Merkmalen von Anspruch 13, wobei die beiden Feineinschnitte eines Paares in Verlängerung ihres wellenförmigen Verlaufes in axialer Richtung A des Reifens über eine das Profilband begrenzende Umfangsrille hinweg ein entsprechendes Paar von Feineinschnitten in der radial äußeren Oberfläche eines weiteren durch die Umfangsrille begrenzten Profilbandes bildet. Hierdurch können die Vorteile in einfacher Weise über weite Profilbereiche hinweg gleichmäßig umgesetzt werden, was gerade bei breiten Profilen besonders wünschenswert ist.

Besonders vorteilhaft ist die Ausbildung eines Laufstreifenprofils eines Fahrzeugluftreifens gemäß den Merkmalen von Anspruch 14, wobei in der radial äußeren Oberfläche des Profilbandes das Netz mit einem Paar von wellenförmig in Umfangsrichtung U ausgerichteten Feineinschnitten mit gleicher Wellenlänge (L₁) und mit längs der Erstreckung in Umfangsrichtung U versetzter Phase ausgebildet ist, welches sich insbesondere über den gesamten Umfang des Reifens erstreckt, und wobei der axiale Abstand der beiden in Umfangsrichtung U ausgerichteten Nulldurchgangslinien der beiden Wellenformen kleiner ist als ihre Amplitude, so dass sich die Feineinschnitte über den Umfang des Reifens schneiden. Hierdurch wird eine gleichmäßige Netzstruktur von Feineinschnitten mit gleichmäßiger Verteilung von Feineinschnitten und Griffkanten über das gesamte Profilband hinweg ermöglicht.

Besonders vorteilhaft ist die Ausbildung eines Laufstreifenprofils eines Fahrzeugluftreifens gemäß den Merkmalen von Anspruch 15, wobei die Schnittpunkte S₁ der Feineinschnitte des weiteren Paars von wellenförmig in Umfangsrichtung U ausgerichteten Feineinschnitten zwischen den beiden Feineinschnitten eines ersten Paares von in axialer Richtung A erstreckten Feineinschnitten ausgebildet ist.

Die Erfindung wird im Folgenden an Hand der in den Figuren 1 bis 7 dargestellten Ausführungsbeispiele näher erläutert. Hierin zeigen
- Fig.1: eine Draufsicht auf einen Abschnitt eines Laufstreifenprofiles eines PKW-Fahrzeugluftreifens mit Umfangsrippen,
- Fig.2: Draufsicht auf einen vergrößerten Abschnitt des Laufstreifenprofils von Fig.1,
- Fig.3: das Laufstreifenprofil von Fig.1 in Schnittdarstellung gemäß Schnitt III-III von Fig.1 ,
- Fig.4: das Laufstreifenprofil von Fig.1 in Schnittdarstellung gemäß Schnitt IV-IV von Fig.1,
- Fig.5: das Laufstreifenprofil von Fig.1 in Schnittdarstellung gemäß Schnitt V-V von Fig.1 ,
- Fig.6: das Laufstreifenprofil von Fig.1 in Schnittdarstellung gemäß Schnitt VI-VI von Fig.1 ,
- Fig.7: das Laufstreifenprofil von Fig.1 in Schnittdarstellung gemäß Schnitt VII-VII von Fig.1.

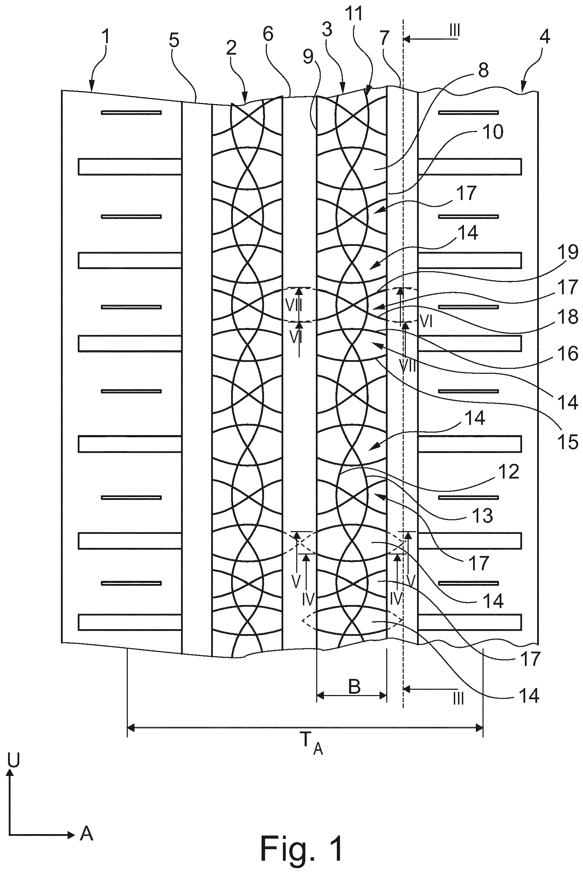

Die Fig. 1 zeigt ein Laufstreifenprofil eines Fahrzeugluftreifens für Personenkraftwagen (PKW), bei dem in axialer Richtung A des Fahrzeugluftreifens eine über den Umfang des Fahrzeugluftreifens erstreckte Schulterprofilblockreihe 1, eine Umfangsrippe 2, eine Umfangsrippe 3 und eine über den Umfang des Fahrzeugluftreifens erstreckte Schulterprofilblockreihe 4 nebeneinander angeordnet sind. Die Schulterprofilblockreihen 1 und 4 sowie die Umfangsrippen 2 und 3 erstrecken sich über den gesamten Umfang des Fahrzeugluftreifens und sind in Umfangsrichtung U ausgerichtet. Die Schulterprofilblockreihe 1 und die Umfangsrippe 2 sind in bekannter Weise in axialer Richtung A durch eine über den gesamten Umfang des Fahrzeugluftreifens erstreckte und in Umfangsrichtung U ausgerichtete Umfangsrille 5 voneinander beabstandet. Die Umfangsrippe 2 und die Umfangsrippe 3 sind in axialer Richtung A durch eine über den gesamten Umfang des Fahrzeugluftreifens erstreckte und in Umfangsrichtung U ausgerichtete Umfangsrille 6 voneinander beabstandet. Die Umfangsrippe 3 und die Schulterprofilblockreihe 4 sind in bekannter Weise in axialer Richtung A durch eine über den gesamten Umfang des Fahrzeugluftreifens erstreckte und in Umfangsrichtung U ausgerichtete Umfangsrille 7 voneinander beabstandet. Die Bodenaufstandsfläche des Fahrzeugluftreifens ist mit einer Bodenaufstandsbreite T_{A} ausgebildet, welche sich in axialer Richtung A aus dem axialen Erstreckungsbereich der Schulterprofilblockreihe 1 bis in den axialen Erstreckungsbereich der Schulterprofilblockreihe 4 erstreckt. Die Bodenaufstandsbreite T_{A} wird dabei am montierten Fahrzeugluftreifen im Betriebszustand bei Normdruck bemessen.

Die Umfangsrillen 5, 6 und 7 sind in radialer Richtung R des Fahrzeugluftreifens nach innen hin jeweils von einem Rillengrund 23 begrenzt, welcher über den gesamten Umfang des Fahrzeugluftreifens erstreckt ausgebildet ist. Die Umfangsrippen 2 und 3 sind in radialer Richtung R nach außen hin von einer die Bodenkontaktoberfläche bildenden Oberfläche 8 begrenzt, welche sich jeweils über den gesamten Umfang des Fahrzeugluftreifens in Umfangsrichtung U und bei der Umfangsrippe 3 in axialer Richtung A von der Umfangsrille 6 bis zur Umfangsrille 7 hin und bei der Umfangsrippe 2 in axialer Richtung A von der Umfangsrille 5 bis zur Umfangsrille 6 hin erstreckt. Die Umfangsrille 5 ist in axialer Richtung A zur Umfangsrippe 2 hin durch eine Rillenwand begrenzt, welche die zur Umfangsrille 5 hin gerichtete Flanke der Umfangsrippe 2 bildet, und zur Schulterprofilblockreihe 1 hin durch eine Rillenwand, welche die zur Umfangsrille 5 hin gerichtete Flanke der Schulterprofilblockreihe 1 bildet. Die Umfangsrille 6 ist in axialer Richtung A zur Umfangsrippe 2 hin durch eine Rillenwand begrenzt, welche die zur Umfangsrille 6 hin gerichtete Flanke der Umfangsrippe 2 bildet, und zur Umfangsrippe 3 hin durch eine Rillenwand, welche die zur Umfangsrille 6 hin gerichtete Flanke 9 der Umfangsrippe 3 bildet. Die Umfangsrille 7 ist zur Umfangsrippe 3 hin durch eine Rillenwand begrenzt, welche die zur Umfangsrille 7 hin gerichtete Flanke 10 der Umfangsrippe 3 bildet, und zur Schulterprofilblockreihe 4 hin durch eine Rillenwand, welche die zur Umfangsrille 7 hingerichtete Flanke der Schulterprofilblockreihe 4 bildet. Die Flanke 9 der Umfangsrippe 3 erstreckt sich in radialer Richtung R aus dem Rillengrund 23 der Umfangsrille 6 bis zur radial äußeren Oberfläche 8 der Umfangsrippe 3. Ebenso erstreckt sich die Flanke 10 der Umfangsrippe 3 aus dem Rillengrund 23 der Umfangsrille 7 in radialer Richtung R bis zur radialen äußeren Oberfläche 8 der Umfangsrippe 3. Entsprechend erstrecken sich die beiden die Umfangsrippe 2 begrenzenden Flanken jeweils aus dem Rillengrund 23 der jeweils zugeordneten Umfangsrille 5 bzw. 6 in radialer Richtung R bis zu der die Umfangsrippe 2 nach radial außen hin begrenzenden Oberfläche 8.

Die Umfangsrippe 3 und die Umfangsippe 2 ist jeweils in axialer Richtung A mit einer Breite B ausgebildet, welche in der radial äußeren Oberfläche 8 bemessen wird.

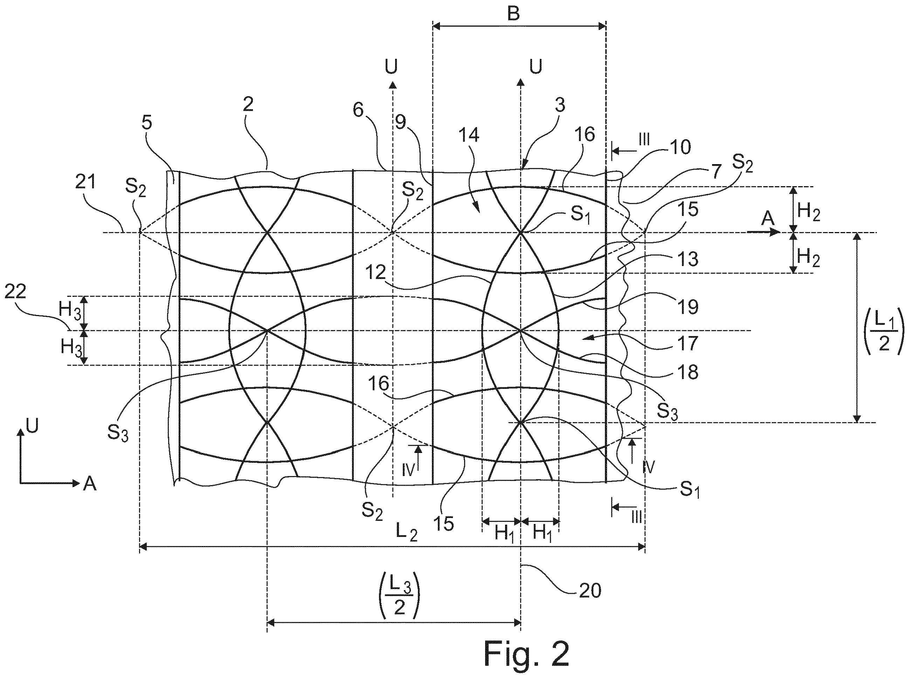

In der Umfangsrippe 3 ist - wie in den Figuren 1 und 2 darstellt ist - ein Paar 11 von in Umfangsrichtung U ausgerichteten und über den Umfang des Reifens erstreckten wellenförmigen Feineinschnitten 12 und 13 ausgebildet. Die wellenförmigen Feineinschnitte 12 und 13 sind um eine gemeinsame in Umfangsrichtung U ausgerichtete Nulldurchgangslinie 10 wellenförmig ausgebildet. Die Wellenform des Feineinschnitts 10 und die Wellenform des Feineinschnitts 11 sind jeweils dabei mit gleicher Wellenlänge L₁ jedoch um einen Phasenwinkel π in Umfangsrichtung U versetzt zueinander ausgebildet. Die Wellenform der beiden Feineinschnitte 12 und 13 ist mit gleicher von der Nulldurchgangslinie 10 gemessener Amplitudenhöhe H₁ ausgebildet. Die beiden Wellenlinien der Feineinschnitte 12 und 13 sind an der Nulldurchgangslinie 10 ineinander gespiegelt ausgebildet. Die beiden Wellenlinien der Feineinschnitte 12 und 13 schneiden sich dabei jeweils in im Abstand (L₁/2) in Umfangsrichtung U voneinander angeordneten Schnittpunkten S₁.

Bei Ausbildung eines Reifens in bekannter Weise mit einer Pitchfolgenausbildung des Profils ist der Pitchfolgenverteilung entsprechend die Wellenlänge L₁ über den Umfang des Fahrzeugluftreifens hinweg alternierend ausgebildet. Zwischen zwei in Umfangsrichtung U hintereinander angeordnet ausgebildeten Schnittpunkten S₁ ist jedoch auch dann die Wellenlänge beider Feineinschnitte 12 und 13 jeweils gleich groß.

Die Feineinschnitte 12 und 13 sind dabei längs ihrer Erstreckung in Umfangsrichtung U mit einer gemessen von der radial äußeren Oberfläche 8 der Umfangsrippe 3 in radialer Richtung R nach innen gemessenen Tiefe t₂ ausgebildet.

Wie in Fig. 2 zu erkennen ist, ist ebenso in der Umfangsrippe 2 in analoger Weise ein Paar 11 von in Umfangsrichtung U ausgerichteten wellenförmigen Feineinschnitten 12 und 13 ausgebildet, wobei jeweils ein Schnittpunkt S₁ der Feineinschnitten 12 und 13 in der Umfangsrippe 2 in einer Umfangsposition des Reifens ausgebildet ist, in der auch ein Schnittpunkt S₁ in der Umfangsrippe 3 ausgebildet ist. Ebenso ist jeweils ein Schnittpunkt S₁ der Feineinschnitten 12 und 13 in der Umfangsrippe 3 in einer Umfangsposition des Reifens ausgebildet ist, in der auch ein Schnittpunkt S₁ in der Umfangsrippe 2 ausgebildet ist.

Wie den Figuren 1 und 2 zu entnehmen ist, sind über den Umfang des Fahrzeugluftreifens in Umfangsrichtung U verteilt in den Umfangsrippen 2 und 3 jeweils in alternierender Reihenfolge ein Paar 14 von in axialer Richtung A ausgerichteten wellenförmigen Feineinschnitten 15 und 16 und ein Paar 17 von in axialer Richtung A ausgerichteten wellenförmigen Feineinschnitten 18 und 19 ausgebildet.

Das Paar 14 von wellenförmigen Feineinschnitten 15 und 16 ist dabei derart ausgebildet, dass sich die Feineinschnitte 15 und 16 jeweils um eine in axialer Richtung A ausgerichtete Nulldurchgangslinie 21 wellenförmig erstrecken, wobei die Wellenform der Feineinschnitte 15 und 16 eine Wellenlänge L₂ aufweist mit (L₂)/2 > B. Die Wellenform der Feineinschnitte 15 und 16 ist dabei in axialer Richtung A des Fahrzeugluftreifens um einen Phasenwinkel π versetzt zueinander ausgebildet, so dass sich die beiden Feineinschnitte 15 und 16 jeweils in auf der Nulldurchgangslinie 21 im Abstand (L₂/2) voneinander ausgebildeten Schnittpunkten S₂ schneiden. Die Wellenform der Feineinschnitte 15 und 16 ist dabei jeweils mit gleicher von der Nulldurchgangslinie 21 in Umfangsrichtung U gemessenen Amplitude H₂ ausgebildet. Der Feineinschnitt 15 weist in seiner Wellenform jeweils ein Maximum in gleicher axialer Position auf, in der der Feineinschnitt 16 ein Minimum aufweist. Der Feineinschnitt 15 weist in seiner Wellenform jeweils in gleicher axialer Position ein Minimum auf, in der die Wellenform des Feineinschnitts 16 ein Maximum aufweist. Die Schnittpunkte S₂ sind dabei außerhalb der Umfangsrippen 2 und 3 ausgebildet, wobei ein Schnittpunkt S₂ der Wellenformen der Feineinschnitte 15 und 16 im Erstreckungsbereich der Umfangsrille 6, ein Schnittpunkt S₂ im Erstreckungsbereich der Umfangsrille 5 und ein Schnittpunkt S₂ im Erstreckungsbereich der Umfangsrille 7 ausgebildet ist. Diese Schnittpunkte S₂ sind dabei in der axialen Verlängerung der radial äußeren Oberfläche 8 in diese jeweilige Umfangsrille 5, 6 bzw. 7 hinein ausgebildet.

Die Schnittpunkte S₁ des Paars 11 der in Umfangsrichtung U ausgerichteten wellenförmigen Feineinschnitte 12 und 13 sind dabei jeweils in der axialen Position der Maxima bzw. Minima der Wellenform der Feineinschnitte 15 und 16 des Paars von Feineinschnitten 14 zwischen den beiden Feineinschnitten 15 und 16 eines Paares 14 ausgebildet.

Zwischen zwei in Umfangsrichtung U hintereinander angeordneten Paaren 14 von Feineinschnitten 15 und 16 ist jeweils ein Paar 17 von Feineinschnitten 18 und 19 ausgebildet, welche ebenfalls in axialer Richtung A des Fahrzeugluftreifens ausgerichtet und wellenförmig um eine in axialer Richtung A ausgerichtete gemeinsame Nulldurchgangslinie 22 verlaufend ausgebildet sind. Die beiden Feineinschnitte 18 und 19 eines Paares 17 von Feineinschnitten sind dabei jeweils mit gleicher in axialer Richtung A gemessener Wellenlänge L₃ und mit jeweils gleicher von der Nulldurchgangslinie 22 in Umfangsrichtung U gemessenen Amplitude H₃ ausgebildet. Die Feineinschnitte 18 und 19 sind dabei mit ihrer Wellenform derart ausgebildet, dass sie in axialer Richtung A um einen Phasenwinkel π versetzt zueinander ausgebildet sind und sich jeweils entlang der axialen Erstreckung der Nulldurchgangslinie 22 in auf der Nulldurchgangslinie 22 ausgebildeten Schnittpunkten S₃ schneiden. Dabei ist jeweils genau ein Schnittpunkt S₃ eines Paares 17 von Feineinschnitten 18 und 19 in der radial äußeren Oberfläche 8 der Umfangsrippe 2 und genau ein Schnittpunkt S₃ eines Paares 17 von Feineinschnitten 18 und 19 in der radial äußeren Oberfläche 8 der Umfangsrippe 3 ausgebildet. Die Schnittpunkte S₃ der Paare 17 von Feineinschnitten 18 und 19 in der Umfangsrippe 3 liegen dabei in gleicher axialer Position wie die Schnittpunkte S₁ des Paares 11 von in Umfangsrichtung U ausgerichteten Feineinschnitten 12 und 13. Ebenso liegen die Schnittpunkte S₃ der Umfangsrippe 2 in gleicher axialer Position wie die Schnittpunkte S₁ des Paares 11 von in Umfangsrichtung U ausgerichteten Feineinschnitten 12 und 13 der Umfangsrippe 2. Die Wellenformen der Feineinschnitte 18 und 19 nehmen ihre Maxima bzw. Minima jeweils in axialen Positionen außerhalb der Umfangsrippe 2 und 3 ein. Der Feineinschnitt 18 und der Feineinschnitt 19 weist sowohl in der Umfangsrille 6 als auch in der Umfangsrille 5 als auch in der Umfangsrille 7 jeweils einen Extremwert seiner Wellenform auf, welcher in gleicher axialer Position ausgebildet wie die Schnittpunkte S₂ der Wellenform der Feineinschnitte 15 und 16.

Die Wellenlängen L₂ und die Wellenlänge L₃ ist mit L₂ = L₃ gewählt. Die Phase der Wellenform des Feineinschnitts 15 des Paares 14 ist in axialer Richtung A gegenüber der Phase der Wellenform des Feineinschnittes 18 des Phasenpaares 17 um einen Phasenwinkel (π/2) verschoben. Die Phase der Wellenform des Feineinschnittes 16 des Paares 14 ist in axialer Richtung A gegenüber der Wellenform des Feineinschnitt 19 des Paares 17 um einen Phasenwinkel (π/2) verschoben.

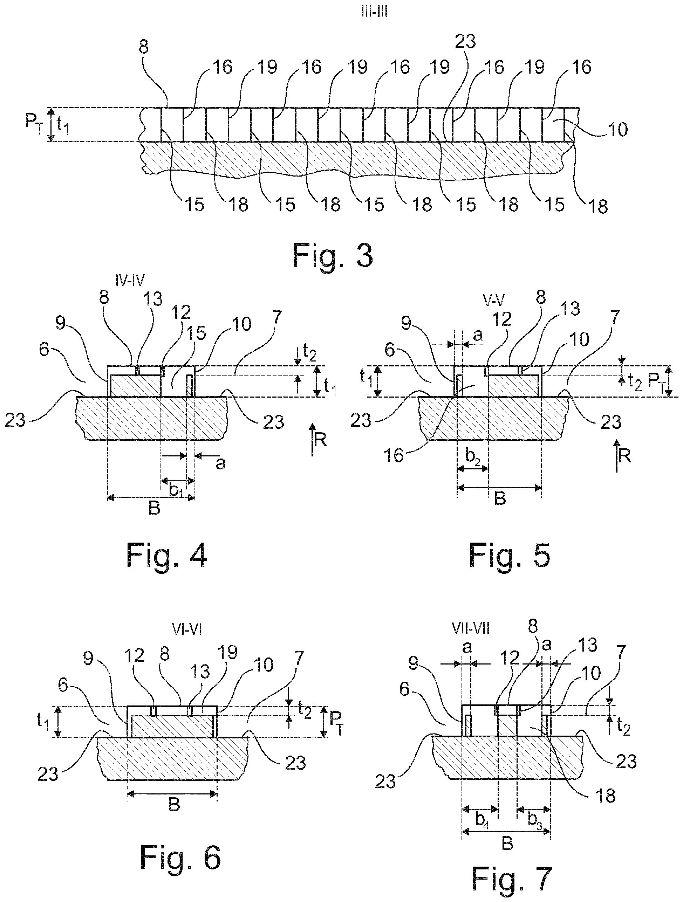

Wie den Figuren 1, 2 und 4 entnommen werden kann, ist der Feineinschnitt 15 in seinem Erstreckungsbereich von der Umfangsrille 6 über die Schnittposition mit dem Feineinschnitt 13 hinweg bis zur Schnittposition mit dem Feineinschnitt 12 mit einer von der radial äußeren Oberfläche 8 gemessenen Tiefe t₂ ausgebildet. In dem axialen Erstreckungsbereich ausgehend von der Schnittposition mit dem Feineinschnitt 12 über die gesamte axiale Erstreckung b₁ bis zur Umfangsrille 7 ist der Feineinschnitt 15 in einer ersten Ausführungsform durchgehend mit einer ausgehend von der radial äußeren Oberfläche 8 nach radial innen hin gemessenen Tiefe t₁ ausgebildet. Der in Umfangsrichtung U dem Feineinschnitt 15 nachgeordnete Feineinschnitt 16 - wie in den Figuren 1, 2 und 5 dargestellt ist - ist ausgehend von der Umfangsrille 7 in seinem Erstreckungsbereich über die Schnittposition mit dem Feineinschnitt 13 hinweg bis zur Schnittposition mit dem Feineinschnitt 12 mit einer von der radial äußeren Oberfläche 8 nach radial innen hin gemessenen Tiefe t₂ ausgebildet. Der Feineinschnitt 16 ist ausgehend von der Schnittposition mit dem Feineinschnitt 12 über seinen gesamten axialen Erstreckungsbereich b₂ bis zur Umfangsrille 6 hin in einer ersten Ausführungsform mit einer von der radial äußeren Oberfläche 8 nach radial innen hin gemessenen Tiefe t₁ ausgebildet. Wie in Fig. 6 dargestellt ist, ist der Feineinschnitt 19 über seinen gesamten axialen Erstreckungsbereich ausgehend von der Umfangsrille 7 bis zur Umfangsrille 6 hin mit einer von der radial äußeren Oberfläche 8 nach radial hin gemessenen Tiefe t₂ ausgebildet. Wie in den Figuren 1, 2 und 7 dargestellt ist, ist der Feineinschnitt 18 in einer ersten Ausführungsform längs seiner axialen Erstreckung ausgehend von der Umfangsrille 7 über seine gesamten axiale Erstreckungsbereich b₃ bis zur Schnittstelle mit dem Feineinschnitt 13 mit einer von der radial äußeren Oberfläche 8 in radialer Richtung R nach innen gemessenen Tiefe t₁ und von der Schnittstelle mit dem Feineinschnitt 13 bis hin zur Schnittstelle mit dem Feineinschnitt 12 mit einer Tiefe t₂ und von der Schnittstelle mit dem Feineinschnitt 12 über seinen gesamten axialen Erstreckungsbereich b₄ bis zur Umfangsrille 6 hin wiederum mit einer Tiefe t₁ ausgebildet. Die Tiefe t₁ ist dabei mit P_{T} ≥ t₁> t₂ ausgebildet, wobei P_{T} jeweils die Profiltiefe darstellt, welche ausgehend von der radial äußeren Oberfläche 8 in radialer Richtung R nach innen bis zum tiefsten Punkt des Rillengrund 23 der angrenzenden Umfangsrillen 6 und 7 bemessen wird.

Die axiale Erstreckung b₁, b₂, b₃ und b₄ ist dabei jeweils mit b₁ ≥ (0,25 B), b₂ ≥ (0,25 B), b₃ ≥ (0,25 B) und b₄ ≥ (0,25 B) ausgebildet.

Im dargestellten Ausführungsbeispiel ist die Tiefe t₁ mit t₁ = P_{T} ausgebildet. Beispielsweise ist t₁ = P_{T} = 7mm ausgebildet. Die Tiefe t₂ ist mit (0,1 P_{T}) ≤ t₂ ≤ (0,4 P_{T}) ausgebildet. Die Tiefe t₂ ist mit 1mm ≤ t₂ ≤ 3mm - beispielsweise mit t₂ = 1,5 mm - ausgebildet.

Auf diese Weise ist jeweils in der Umfangsrippe 3 bzw. in der Umfangsrippe 2 sowohl in dem axialen Erstreckungsabschnitt zwischen Umfangsrille 7 und dem Paar 11 von in Umfangsrichtung ausgerichteten Feineinschnitten 12 und 13 jeweils über den Umfang des Fahrzeugluftreifens hinweg in alternierender Reihenfolge ein axialer Erstreckungsabschnitt eines gekrümmten Feineinschnittes mit der Tiefe t₂ und der in Umfangsrichtung U nachfolgend angeordnete axiale Erstreckungsabschnitt eines gekrümmten Feineinschnittes mit der Tiefe t₁ ausgebildet. Ebenso ist in dem axialen Erstreckungsabschnitt zwischen der Umfangsrille 6 und dem Paar 11 von in Umfangsrichtung erstreckten Feineinschnitten 12 und 13 jeweils über den Umfang des Fahrzeugluftreifens hinweg in alternierender Reihenfolge ein axialer Erstreckungsabschnitt eines gekrümmten Feineinschnitt mit der Tiefe t₁ und der in Umfangsrichtung nachfolgend angeordnete axiale Erstreckungsabschnitt eines gekrümmten Feineinschnittes mit der Tiefe t₂ ausgebildet. Dabei ist in der Umfangsrippe 3 jeweils in der Umfangsposition, in der ein auf der rechten zur Umfangsrille 7 hin ausgebildeter Erstreckungsabschnitt eines Feineinschnitts mit der Tiefe t₂ ausgebildet ist, der links zur Umfangsrille 6 hin ausgebildete Erstreckungsabschnitt mit der Tiefe t₁ ausgebildet und umgekehrt. Somit ergibt sich über den Umfang des Fahrzeugluftreifens hinweg, dass die Umfangsrippe 3 mit ihren Feineinschnitten 12,13,15,16,18 und 19 im Wesentlichen mit den Feineinschnitttiefen t₂ ausgebildet ist, jedoch in den äußeren zu den Umfangsrillen 6 und 7 hin erstreckten axialen Erstreckungsbereichen der in axialer Richtung A ausgerichteten Feineinschnitte 15,16,18 und 19 jeweils mit einem mit in Umfangsrichtung U in alternierender Reihenfolge mit wechselnder Tiefe t₁ und t₂ ausgebildeten Erstreckungsabschnitten von Feineinschnitten. Die Positionen der axialen Erstreckungsbereiche von Feineinschnitten, die mit der Tiefe t₁ ausgebildet sind, sind auf der rechten zur Umfangsrille 7 hin ausgebildeten Seite jeweils in Umfangsrichtung U zu den entsprechenden Positionen der axialen Erstreckungsbereiche von Feineinschnitten, die mit der Tiefe t₁ ausgebildet sind, auf der linken zur Umfangsrille 6 hin ausgebildeten Seite versetzt angeordnet. Die Positionen der axialen Erstreckungsbereiche von Feineinschnitten, die mit der Tiefe t₂ ausgebildet sind, sind auf der rechten zur Umfangsrille 7 hin ausgebildeten Seite jeweils in Umfangsrichtung U zu den entsprechenden Positionen der axialen Erstreckungsbereiche von Feineinschnitten, die mit der Tiefe t₂ ausgebildet sind, auf der linken zur Umfangsrille 6 hin ausgebildeten Seite versetzt angeordnet.

Die Figuren 4 bis 7 zeigen noch ein weiteres Ausführungsbeispiel, bei dem jeweils in den Feineinschnitten 15, 16 und 18 im Erstreckungsbereich b₁, b₂, b₃ und b₄ die die Tiefe t₁ in Richtung zur nächstliegenden Umfangsrille 6 bzw.7 lediglich bis in einen axialen Abstand a von der angrenzenden Umfangsrille 6 bzw. 7 ausgebildet ist. In dem schmalen Erstreckungsbereich a ist der jeweilige Feineinschnitt 15,16 bzw. 18 jeweils lediglich mit der Tiefe t₂ ausgebildet. Die im Erstreckungsbereich a hierdurch erfolgte Anhebung des Feineinschnittsgrundes bindet das Material der Umfangsrippe 3 unmittelbar neben der benachbarten Umfangsrille 6 bzw. 7 durch den Feineinschnitt hinweg an. Die jeweilige Breite a der Anbindung ist dabei im Erstreckungsabschnitt der Breite b₁ mit b₁ ≥ 2a, im Erstreckungsabschnitt der Breite b₂ mit b₂ ≥ 2a, im Erstreckungsabschnitt der Breite b₃ mit b₃ ≥ 2a und im Erstreckungsabschnitt der Breite b₄ mit b₄ ≥ 2a bemessen. Beispielsweise ist a in allen axialen Erstreckungsabschnitten gleich groß gewählt und b₁ = b₂ > b₃ = b₄ = 3a.

In einem Ausführungsbeispiel ist beispielsweise a = 2mm ausgebildet.

In einem nicht dargestellten Ausführungsbeispiel ist der Rillengrund 23 der Umfangsrillen 5, 6 und 7 um ein Maß t₃ gegenüber dem der Profiltiefe P_{T} angehoben. In diesem Ausführungsbeispiel sind die Feineinschnitte 15, 16, 18 und 19 jeweils im Rillengrund 23 noch mit einer gegenüber dem Rillengrund 23 nach radial innen erstreckt ausgebildeten radialen Tiefe t₃ bis zur Erreichung des tiefsten Punktes der Profiltiefe P_{T} fortgeführt.

Dabei ist die Tiefe t₃ mit t₃ ≤ 0,1 P_{T} ausgebildet. Beispielsweise ist t₃ = 0,5 mm ausgebildet.

### Bezugszeichenliste

### (Teil der Beschreibung)

- 1: Schulterblockreihe
- 2: Umfangsrippe
- 3: Umfangsrippe
- 4: Schulterprofilblockreihe
- 5: Umfangsrille
- 6: Umfangsrille
- 7: Umfangsrille
- 8: Radial äußere Oberfläche
- 9: Flanke
- 10: Flanke
- 11: Paar von umfangsorientierten Feineinschnitten
- 12: Feineinschnitt
- 13: Feineinschnitt
- 14: Paar von axial orientierten Feineinschnitten
- 15: Feineinschnitt
- 16: Feineinschnitt
- 17: Paar von axial orientierten Feineinschnitten
- 18: Feineinschnitt
- 19: Feineinschnitt
- 20: Nulldurchgangslinie
- 21: Nulldurchgangslinie
- 22: Nulldurchgangslinie
- 23: Rillengrund

## Patentansprüche

1. Laufstreifenprofil eines Fahrzeugluftreifens mit über den Umfang des Reifens erstreckten Profilbändern (2,3) - wie zum Beispiel Umfangsrippen oder Profilblockreihen -, welche zwischen zwei Umfangsrillen (5,6,7) angeordnet sind, wobei die Profilbänder (3) in axialer Richtung A zu einer das Profilband (3) begrenzenden Umfangsrille (6,7) jeweils von einer Flanke (9,10) begrenzt sind, welche die zum Profilband (3) weisende Rillenwand der Umfangsrille (6,7) bildet, und wobei die Profilbänder (3) in radialer Richtung R nach außen hin von einer die Bodenkontaktoberfläche bildenden radial äußeren Oberfläche (8) begrenzt sind, mit einem Netz von Feineinschnitten in der radial äußeren Oberfläche (8) zumindest eines Profilbandes (3), welches aus im Wesentlichen in Umfangsrichtung U ausgerichteten Feineinschnitten (12,13) und aus diese Feineinschnitte (12,13) schneidenden, von der einen Umfangsrille (6) zur anderen Umfangsrille (7) erstreckten, quer verlaufenden Feineinschnitten (15,16,18,19) ausgebildet ist, **dadurch gekennzeichnet,**
**dass** diejenigen axialen Erstreckungsabschnitte der querverlaufenden Feineinschnitte (15,16,18,19), die jeweils zwischen einer Umfangsrille (6,7) und dem zu dieser Umfangsrille (6,7) nächstgelegenen in Umfangsrichtung U ausgerichteten Feineinschnitt (12,13) des Netzes ausgebildet sind, mit unterschiedlicher in radialer Richtung R gemessener maximaler Tiefe mit wenigstens zwei unterschiedlichen maximalen Tiefen t₁ und t₂ mit t₁ > t₂ ausgebildet sind, wobei diese mit unterschiedlicher maximaler Tiefenausbildung ausgebildeten axialen Erstreckungsabschnitte der Feineinschnitte (15,16,18,19) in Umfangsrichtung U des Fahrzeugluftreifens über den Umfang des Reifens hinweg in alternierender Reihenfolge angeordnet sind, und
**dass** der in dem zwischen den beiden jeweils zu einer der beiden Umfangsrillen (6,7) nächstgelegenen und in Umfangsrichtung U ausgerichteten Feineinschnitten (12,13) des Netzes ausgebildete axiale Erstreckungsabschnitt der querverlaufenden Feineinschnitte (15,16,18,19) mit der kleineren t₂ der wenigstens zwei Tiefen der Feineinschnitte (15,16,18,19) ausgebildet ist.

2. Laufstreifenprofil gemäß den Merkmalen von Anspruch 1,
wobei die querverlaufenden Feineinschnitte (15,16,18,19) des Netzes in dem zwischen dem zu einer Umfangsrille (6,7) jeweils nächstgelegenen in Umfangsrichtung U ausgerichteten Feineinschnitt (12,13) des Netzes und der Umfangsrille (6,7) ausgebildeten axialen Erstreckungsabschnitt, welche in dem Erstreckungsabschnitt mit maximaler Tiefe t₂ ausgebildet sind, in dem gesamten axialen Erstreckungsabschnitt zwischen dem der Umfangsrille (6,7) nächstgelegenen in Umfangsrichtung U ausgerichteten Feineinschnitt (12,13) des Netzes und dieser Umfangsrille (6,7) mit der Tiefe t₂ ausgebildet sind.

3. Laufstreifenprofil gemäß den Merkmalen von Anspruch 1 oder 2,
wobei die in dem zur einen Umfangsrille (6,7) hin angrenzenden mit der größeren Tiefenausbildung t₁ ausgebildeten axialen Erstreckungsabschnitte querverlaufender Feineinschnitte (15,16,18,19) des Netzes in Umfangsrichtung U zwischen den zur anderen Umfangsrille (6,7) hin angrenzenden mit der größeren Tiefenausbildung t₁ ausgebildeten axialen Erstreckungsabschnitten von querverlaufenden Feineinschnitten (15,16,18,19) angeordnet sind.

4. Laufstreifenprofil gemäß den Merkmalen von einem oder mehreren der vorangegangenen Ansprüche,
wobei die in der radial äußeren Oberfläche (8) ausgebildeten Feineinschnitte des Netzes des Profilbandes (3) Paare (14) von in Umfangsrichtung U hintereinander benachbart angeordneten in axialer Richtung A erstreckten Feineinschnitten (15,16) aufweisen mit einem in der radial äußeren Oberfläche (8) längs der axialen Erstreckung von der einen Umfangsrille (6) zur anderen Umfangsrille (7) entgegengesetzt zueinander gekrümmtem Verlauf.

5. Laufstreifenprofil gemäß den Merkmalen von Anspruch 4,
wobei in der radial äußeren Oberfläche (8) des Profilbandes (3) das Netz mit zwei unterschiedlichen Paaren (14,17) von in Umfangsrichtung U hintereinander benachbart angeordneten Feineinschnitten (15,16,18,19) mit einem in der radial äußeren Oberfläche (8) längs der axialen Erstreckung von der einen Umfangsrille (6) zur anderen Umfangsrille (7) entgegengesetzt gekrümmtem Verlauf ausgebildet sind, welche über den Umfang des Reifens verteilt in alternierender Reihenfolge angeordnet sind.

6. Laufstreifenprofil gemäß den Merkmalen von Anspruch 4 oder 5,
wobei der gekrümmte Verlauf beider Feineinschnitte (15,16,18,19) eines Paares (14,17) jeweils einen Abschnitt einer in axialer Richtung A erstreckten Wellenform mit in Umfangsrichtung U gemessener Amplitude bildet.

7. Laufstreifenprofil gemäß den Merkmalen von Anspruch 6,
wobei der gekrümmte Verlauf beider Feineinschnitte (15,16,18,19) eines Paares (14,17) jeweils einen zu einander phasenversetzten Abschnitt einer Wellenform gleicher Wellenlänge (L₂,L₃) bildet.

8. Laufstreifenprofil gemäß den Merkmalen von Anspruch 6 oder 7,
wobei der gekrümmte Verlauf beider Feineinschnitte eines Paares jeweils einen zu einander phasenversetzten Abschnitt einer Wellenform gleicher in Umfangsrichtung U gemessener Amplitude bildet.

9. Laufstreifenprofil gemäß den Merkmalen von einem oder mehreren der Ansprüche 6, 7 oder 8,
wobei die Phase des einen Feineinschnitts (15,18) eines Paares gegenüber der des anderen Feineinschnitts (16,19) um einen Phasenwinkel π versetzt ist.

10. Laufstreifenprofil gemäß den Merkmalen von Anspruch 5,6 und 8,
wobei die Phase des einen Feineinschnitts (15) des ersten Paares (14) gegenüber dem einen Feineinschnitt (18) des zweiten Paares (17) um einen Phasenwinkel (π/2) und die Phase des zweiten Feineinschnitts (16) des ersten Paares (14) gegenüber dem zweiten Feineinschnitt (19) des zweiten Paares (17) um einen Phasenwinkel (π/2) versetzt ausgebildet ist.

11. Laufstreifenprofil gemäß den Merkmalen von Anspruch 10,
wobei die beiden Feineinschnitte (18,19) des zweiten Paares (17) sich in der radial äußeren Oberfläche (8) des Profilbandes (7) - insbesondere in ihrem Wendepunkt - schneiden.

12. Laufstreifenprofil gemäß den Merkmalen von Anspruch 10,
wobei die beiden Feineinschnitte (15,16) des ersten Paares (14) sich in der radial äußeren Oberfläche (8) des Profilbandes (3) nicht schneiden.

13. Laufstreifenprofil gemäß den Merkmalen von einem oder mehreren der vorangegangenen Ansprüche 6 bis 12,
wobei die beiden Feineinschnitte (15,16) eines Paares (14) in Verlängerung ihres wellenförmigen Verlaufes in axialer Richtung A des Reifens über eine das Profilband (3) begrenzende Umfangsrille (6) hinweg ein entsprechendes Paar (14) von Feineinschnitten (15,16) in der radial äußeren Oberfläche (8) eines weiteren durch die Umfangsrille (6) begrenzten Profilbandes (2) bildet.

14. Laufstreifenprofil gemäß den Merkmalen von einem oder mehreren der vorangegangenen Ansprüche 1 bis 13,
wobei in der radial äußeren Oberfläche (8) des Profilbandes (3) das Netz mit einem Paar (11) von wellenförmig in Umfangsrichtung U ausgerichteten Feineinschnitten (12,13) mit gleicher Wellenlänge (L₁) und mit längs der Erstreckung in Umfangsrichtung U versetzter Phase ausgebildet ist, welches sich insbesondere über den gesamten Umfang des Reifens erstreckt, und
wobei der axiale Abstand der beiden in Umfangsrichtung U ausgerichteten Nulldurchgangslinien der beiden Wellenformen kleiner ist als ihre Amplitude, so dass sich die Feineinschnitte (12,13) über den Umfang des Reifens schneiden.

15. Laufstreifenprofil gemäß den Merkmalen von Anspruch 14,
wobei die Schnittpunkte S₁ der Feineinschnitte (12,13) des weiteren Paars (11) von wellenförmig in Umfangsrichtung U ausgerichteten Feineinschnitten (12,13) zwischen den beiden Feineinschnitten (15,16) eines ersten Paares (14) von in axialer Richtung A erstreckten Feineinschnitten (15,16) ausgebildet ist.

## Claims

1. Tread profile of a pneumatic vehicle tyre, having profile bands (2, 3) - for example circumferential ribs or profile block rows - which extend over the circumference of the tyre and which are arranged between two circumferential channels (5, 6, 7), wherein the profile bands (3) are, in an axial direction A toward a circumferential channel (6, 7) delimiting the profile band (3), delimited in each case by a flank (9, 10) which forms that channel wall of the circumferential channel (6, 7) which points towards the profile band (3), and wherein the profile bands (3) are delimited in a radial direction R toward the outside by a radially outer surface (8) which forms the ground contact surface, having a network of sipes in the radially outer surface (8) of at least one profile band (3), which network is formed from sipes (12, 13) oriented substantially in a circumferential direction U and of transversely running sipes (15, 16, 18, 19) which intersect said sipes (12, 13) and which extend from one circumferential channel (6) to the other circumferential channel (7), **characterized**
**in that** those axial extent sections of the transversely running sipes (15, 16, 18, 19) which are formed in each case between a circumferential channel (6, 7) and that sipe (12, 13) of the network which is situated closest to said circumferential channel (6, 7) and oriented in the circumferential direction U are formed with different maximum depths measured in the radial direction R, with at least two different maximum depths t₁ and t₂, where t₁ > t₂, wherein said axial extent sections of the sipes (15, 16, 18, 19) which are formed with different maximum depths are arranged in an alternating sequence over the circumference of the tyre in the circumferential direction U of the pneumatic vehicle tyre, and in that that axial extent section of the transversely running sipes (15, 16, 18, 19) which is formed in the between those two sipes (12, 13) of the network which are situated in each case closest to one of the two circumferential channels (6, 7) and oriented in the circumferential direction U is formed with the smaller t₂ of the at least two depths of the sipes (15, 16, 18, 19).

2. Tread profile according to the features of Claim 1,
wherein the transversely running sipes (15, 16, 18, 19) of the network, in the axial extent section formed between that sipe (12, 13) of the network which is in each case situated closest to a circumferential channel (6, 7) and oriented in the circumferential direction U and the circumferential channel (6, 7), which sipes are formed in the extent section with the maximum depth t₂, are formed with the depth t₂ in the entire axial extent section between that sipe (12, 13) of the network which is situated closest to the circumferential channel (6, 7) and oriented in the circumferential direction U and said circumferential channel (6, 7).

3. Tread profile according to the features of Claim 1 or 2,
wherein those axial extent sections of transversely running sipes (15, 16, 18, 19) of the network which adjoin one circumferential channel (6, 7) and which are formed in the with the relatively large depth t₁ are arranged in the circumferential direction U between those axial extent sections of transversely running sipes (15, 16, 18, 19) which adjoin the other circumferential channel (6, 7) and which are formed with the relatively large depth t₁.

4. Tread profile according to the features of one or more of the preceding claims,
wherein those sipes of the network of the profile band (3) which are formed in the radially outer surface (8) have pairs (14) of sipes (15, 16) which are arranged adjacently one behind the other in the circumferential direction U and which extend in the axial direction A, which pairs have, in the radially outer surface (8), a mutually oppositely curved profile along the axial extent from one circumferential channel (6) to the other circumferential channel (7).

5. Tread profile according to the features of Claim 4,
wherein, in the radially outer surface (8) of the profile band (3), the network are formed with two different pairs (14, 17) of sipes (15, 16, 18, 19) which are arranged adjacently one behind the other in the circumferential direction U, which pairs have, in the radially outer surface (8), an oppositely curved profile along the axial extent from one circumferential channel (6) to the other circumferential channel (7), and which pairs are arranged so as to be distributed in an alternating sequence over the circumference of the tyre.

6. Tread profile according to the features of Claim 4 or 5,
wherein the curved profile of the two sipes (15, 16, 18, 19) of a pair (14, 17) forms in each case one section of an undulating form which extends in the axial direction A and which has an amplitude measured in the circumferential direction U.

7. Tread profile according to the features of Claim 6,
wherein the curved profile of the two sipes (15, 16, 18, 19) of a pair (14, 17) forms in each case one mutually phase-offset section of an undulating form of equal wavelength (L₂, L₃).

8. Tread profile according to the features of Claim 6 or 7,
wherein the curved profile of both sipes of a pair forms in each case one mutually phase-offset section of an undulating form of equal amplitude measured in the circumferential direction U.

9. Tread profile according to the features of one or more of Claims 6, 7 or 8,
wherein the phase of one sipe (15, 18) of a pair is offset by a phase angle π with respect to that of the other sipe (16, 19).

10. Tread profile according to the features of Claim 5, 6 and 8,
wherein the phase of one sipe (15) of the first pair (14) is formed so as to be offset with respect to one sipe (18) of the second pair (17) by a phase angle (n/2), and the phase of the second sipe (16) of the first pair (14) is formed so as to be offset with respect to the second sipe (19) of the second pair (17) by a phase angle (n/2) .

11. Tread profile according to the features of Claim 10,
wherein the two sipes (18, 19) of the second pair (17) intersect in the radially outer surface (8) of the profile band (7) - in particular at their inflection point.

12. Tread profile according to the features of Claim 10,
wherein the two sipes (15, 16) of the first pair (14) do not intersect in the radially outer surface of the profile band (3).

13. Tread profile according to the features of one or more of the preceding Claims 6 to 12,
wherein the two sipes (15, 16) of a pair (14), in an elongation of their undulating profile in an axial direction A of the tyre across a circumferential channel (6) delimiting the profile band (3), forms a corresponding pair (14) of sipes (15, 16) in the radially outer surface (8) of a further profile band (2) delimited by the circumferential channel (6).

14. Tread profile according to the features of one or more of the preceding Claims 1 to 13,
wherein, in the radially outer surface (8) of the profile band (3), the network is formed with a pair (11) of sipes (12, 13) which are oriented in undulating fashion in the circumferential direction U with equal wavelength (Li) and with a phase offset along the extent in the circumferential direction U, which pair extends in particular over the entire circumference of the tyre, and
wherein the axial spacing between the two zero-crossing lines, oriented in the circumferential direction U, of the two undulating forms is smaller than the amplitude thereof, such that the sipes (12, 13) intersect over the circumference of the tyre.

15. Tread profile according to the features of Claim 14,
wherein the intersection points S₁ of the sipes (12, 13) of the further pair (11) of sipes (12, 13) oriented in undulating fashion in the circumferential direction U is formed between the two sipes (15, 16) of a first pair (14) of sipes (15, 16) extending in the axial direction A.

## Revendications

1. Profil de bande de roulement d'un pneu de véhicule, comprenant des bandes profilées (2, 3) s'étendant sur la périphérie du pneu, par exemple des nervures périphériques ou des rangées de blocs profilés, qui sont disposées entre deux rainures périphériques (5, 6, 7), les bandes profilées (3) étant limitées dans la direction axiale A par rapport à une rainure périphérique (6, 7) limitant la bande profilée (3) à chaque fois par un flanc (9, 10), qui forme la paroi de rainure de la rainure périphérique (6, 7) tournée vers la bande profilée (3), et les bandes profilées (3) étant limitées dans la direction radiale R vers l'extérieur par une surface (8) radialement extérieure formant la surface de contact avec le sol, avec un réseau de fines entailles dans la surface radialement extérieure (8) d'au moins une bande profilée (3), qui est réalisé à partir de fines entailles (12, 13) orientées essentiellement dans la direction périphérique U et à partir de fines entailles (15, 16, 18, 19) s'étendant transversalement, intersectant ces fines entailles (12, 13) et s'étendant depuis l'une des rainures périphériques (6) vers l'autre rainure périphérique (7),
**caractérisé**
**en ce que** les portions d'étendue axiales des fines entailles s'étendant transversalement (15, 16, 18, 19), qui sont à chaque fois réalisées entre une rainure périphérique (6, 7) et la fine entaille (12, 13) du réseau orientée dans la direction périphérique U la plus proche de cette rainure périphérique (6, 7), sont réalisées avec une profondeur maximale différente, mesurée dans la direction radiale R, avec au moins deux profondeurs maximales différentes t₁ et t₂ et avec t₁ > t₂, ces portions d'étendue axiale des fines entailles (15, 16, 18, 19) ayant une réalisation en profondeur maximale différente étant disposées dans la direction périphérique U du pneu de véhicule le long de la périphérie du pneu en succession alternée, et
**en ce que** la portion d'étendue axiale des fines entailles (15, 16, 18, 19) s'étendant transversalement, réalisée dans la entre les deux fines entailles (12, 13) du réseau à chaque fois les plus proches de l'une des deux rainures périphériques (6, 7) et orientées dans la direction périphérique U, est réalisée avec la plus petite profondeur t₂ des au moins deux profondeurs des fines entailles (15, 16, 18, 19).

2. Profil de bande de roulement selon les caractéristiques de la revendication 1, dans lequel les fines entailles (15, 16, 18, 19) du réseau s'étendant transversalement dans la portion d'étendue axiale réalisée entre la fine entaille (12, 13) du réseau orientée dans la direction périphérique U à chaque fois la plus proche de l'une des rainures périphériques (6, 7) et la rainure périphérique (6, 7), qui sont réalisées dans la portion d'étendue avec la profondeur maximale t₂, sont réalisées dans toute la portion d'étendue axiale entre la fine entaille (12, 13) du réseau orientée dans la direction périphérique U la plus proche de la rainure périphérique (6, 7) et cette rainure périphérique (6, 7) avec la profondeur t₂.

3. Profil de bande de roulement selon les caractéristiques de la revendication 1 ou 2, dans lequel, les portions d'étendue axiale de fines entailles (15, 16, 18, 19) du réseau s'étendant transversalement, réalisées dans le avec la plus grande profondeur t₁ et adjacentes à une rainures périphériques (6, 7), sont disposées dans la direction périphérique U entre les portions d'étendue axiales de fines entailles s'étendant transversalement (15, 16, 18, 19) adjacentes à l'autre rainure périphérique (6, 7) et réalisées avec la plus grande profondeur t₁.

4. Profil de bande de roulement selon les caractéristiques de l'une ou plusieurs des revendications précédentes, dans lequel les fines entailles du réseau de la bande profilée (3) réalisées dans la surface radialement extérieure (8) présentent des paires (14) de fines entailles (15, 16) adjacentes s'étendant dans la direction axiale A l'une derrière l'autre dans la direction périphérique U avec une courbure mutuellement opposée dans la surface radialement extérieure (8) le long de l'étendue axiale de l'une des rainures périphériques (6) vers l'autre rainure périphérique (7).

5. Profil de bande de roulement selon les caractéristiques de la revendication 4, dans lequel, dans la surface radialement extérieure (8) de la bande profilée (3), le réseau sont réalisés avec deux paires différentes (14, 17) de fines entailles (15, 16, 18, 19) adjacentes disposées les unes derrière les autres dans la direction périphérique U avec une courbure opposée dans la surface radialement extérieure (8) le long de l'étendue axiale depuis l'une des rainures périphériques (6) vers l'autre rainure périphérique (7), lesquelles sont disposées sur la périphérie du pneu de manière répartie en succession alternée.

6. Profil de bande de roulement selon les caractéristiques de la revendication 4 ou 5, dans lequel la courbure des deux fines entailles (15, 16, 18, 19) d'une paire (14, 17) forme à chaque fois une portion d'une forme d'onde s'étendant dans la direction axiale A et ayant une amplitude mesurée dans la direction périphérique U.

7. Profil de bande de roulement selon les caractéristiques de la revendication 6, dans lequel la courbure des deux fines entailles (15, 16, 18, 19) d'une paire (14, 17) forme à chaque fois une portion d'une forme d'onde à chaque fois mutuellement déphasée et de même longueur d'onde (L₂, L₃).

8. Profil de bande de roulement selon les caractéristiques de la revendication 6 ou 7, dans lequel la courbure des deux fines entailles d'une paire forme à chaque fois une portion mutuellement déphasée d'une forme d'onde de même amplitude mesurée dans la direction périphérique U.

9. Profil de bande de roulement selon les caractéristiques d'une ou plusieurs des revendications 6, 7 ou 8,
dans lequel la phase de l'une des fines entailles (15, 18) d'une paire est décalée par rapport à celle de l'autre fine entaille (16, 19) d'un angle de phase n.

10. Profil de bande de roulement selon les caractéristiques des revendications 5, 6 et 8, dans lequel la phase de l'une des fines entailles (15) de la première paire (14) est réalisée de manière décalée par rapport à l'une des fines entailles (18) de la deuxième paire (17) d'un angle de phase (n/2) et la phase de la deuxième fine entaille (16) de la première paire (14) est réalisée de manière décalée par rapport à la deuxième fine entaille (19) de la deuxième paire (17) d'un angle de phase (π/2).

11. Profil de bande de roulement selon les caractéristiques de la revendication 10, dans lequel les deux fines entailles (18, 19) de la deuxième paire (17) s'intersectent dans la surface radialement extérieure (8) de la bande profilée (7), en particulier au niveau de leur point d' inflexion.

12. Profil de bande de roulement selon les caractéristiques de la revendication 10, dans lequel les deux fines entailles (15, 16) de la première paire (14) ne s'intersectent pas dans la surface radialement extérieure (8) de la bande profilée (3).

13. Profil de bande de roulement selon les caractéristiques de l'une ou plusieurs des revendications précédentes 6 à 12, dans lequel les deux fines entailles (15, 16) d'une paire (14) dans le prolongement de leur allure en forme d'onde dans la direction axiale A du pneu au-delà d'une rainure périphérique (6) limitant la bande profilée (3) forme une paire correspondante (14) de fines entailles (15, 16) dans la surface radialement extérieure (8) d'une bande profilée supplémentaire (2) limitée par la rainure périphérique (6).

14. Profil de bande de roulement selon les caractéristiques d'une ou plusieurs des revendications précédentes 1 à 13, dans lequel, dans la surface radialement extérieure (8) de la bande profilée (3), le réseau est réalisé avec une paire (11) de fines entailles (12, 13) orientées en forme d'onde dans la direction périphérique U et ayant la même longueur d'onde (Li) et déphasées le long de l'étendue dans la direction périphérique U, lequel réseau s'étend notamment sur toute la périphérie du pneu, et la distance axiale des deux lignes de passage à zéro des deux formes d'ondes orientées dans la direction périphérique U est inférieure à leur amplitude de telle sorte que les fines entailles (12, 13) s'intersectent sur la périphérie du pneu.

15. Profil de bande de roulement selon les caractéristiques de la revendication 14, dans lequel les points d'intersection S₁ des fines entailles (12, 13) de la paire supplémentaire (11) de fines entailles (12, 13) orientées en forme d'onde dans la direction périphérique U est réalisé entre les deux fines entailles (15, 16) d'une première paire (14) de fines entailles (15, 16) s'étendant dans la direction axiale A.
